# EUROPEAN PATENT APPLICATION

(11) **EP 4 160 509 A1**
(43) Date of publication of application: **05.04.2023**
(21) Application number: 21812159.8
(22) Date of filing: 26.05.2021
(51) Int. Cl.: G06Q 30/06, G06Q 20/20, G06Q 30/02, G07G 1/00, G07G 1/01, G07G 1/12, G07G 1/14

(54) **INFORMATION PROCESSING SYSTEM, INFORMATION PROCESSING METHOD, AND PROGRAM**

(30) Priority: 29.05.2020 JP 2020094872; 26.10.2020 JP 2020178673; 07.05.2021 JP 2021079115
(71) Applicant: Sato Holdings Kabushiki Kaisha, Tokyo 108-0023 (JP)
(72) Inventor: OGUCHI, Kentaro, Tokyo 108-0023 (JP)
(74) Representative: Grünecker Patent- und Rechtsanwälte PartG mbB
(86) International application number: PCT/JP2021/020064
(87) International publication number: WO 2021/241653

(57) **Abstract**

An embodiment of an information processing system includes a user terminal carried by a user; and a server being capable of communicating with the user terminal. The user terminal is comprised of an obtaining unit configured to obtain product information and expiration information related to an expiration date of a product from the product; and a display controller configured to cause a display to show information containing an offered price of the product, which is acquired from the server. The server is comprised of a price determination unit configured to determine the offered price of the product based on the product information and the expiration information acquired from the user terminal; and a price information providing unit configured to provide information that contains the offered price of the product determined by the price determination unit, to the user terminal.

## Description

### FIELD

The present invention relates to an information processing system, an information processing method, and a program.

### BACKGROUND

Attaching labels (markdown labels) for showing markdowns (price reduction), on products, has been conventionally performed, for example, in retailing, for the purpose of providing a bargain feeling to encourage customers to purchase. Such markdown labels can be issued by various kinds of printers have been developed.

An example of printers that have been devised includes a printer having a determination unit and a printing unit (for example, refer to Japanese Unexamined Patent Application Publication No. 2000-016414). The determination unit determines whether to print a plurality of pieces of price data, which are data of a fixed price and a price lower than the fixed price. The printing unit prints an indication showing that the fixed price is a regular price, in the vicinity of the fixed price data, in the case in which the determination unit determines to print the plurality of pieces of price data.

### BRIEF SUMMARY

### TECHNICAL PROBLEM

In order to mark down prices, a store staff of a retail store, such as a supermarket, visually checks a best-by date of each product before issuing a markdown label of a markdown target product being close to the best-by date determined by rules of the store and attaches the label (markdown work). The markdown work can be performed several times a day and thus requires a lot of working time in total. The markdown work is often performed during late afternoon or evening hours, which is a large burden for a store staff.

However, unless the markdown work is performed, reduced prices are not notified to consumers, and products close to the best-by dates remain unsold, finally resulting in food waste. For this reason, the markdown work is difficult to eliminate in a store.

In view of this, an object of the present invention is to improve efficiency of work in changing prices of products in a store.

### SOLUTION TO PROBLEM

One aspect of the present invention provides an information processing system including a user terminal carried by a user and a server being capable of communicating with the user terminal. The user terminal includes an obtaining unit and a display controller. The obtaining unit is configured to obtain product information and expiration information related to an expiration date of a product from the product. The display controller is configured to cause a display to show information containing an offered price of the product, which is acquired from the server. The server includes a price determination unit and a price information providing unit. The price determination unit is configured to determine the offered price of the product based on the product information and the expiration information acquired from the user terminal. The price information providing unit is configured to provide information that contains the offered price of the product determined by the price determination unit, to the user terminal.

### ADVANTAGEOUS EFFECTS

The one aspect of the present invention improves efficiency of work in changing prices of products in a store.

### BRIEF DESCRIPTION OF DRAWINGS

FIG. 1 schematically shows a system configuration of a price showing system of a first embodiment.
FIG. 2 shows an example of screen transition of a store application of a user terminal.
FIG. 3 shows an example of screen transition of the store application of the user terminal.
FIG. 4 is a block diagram showing an internal configuration of each device of the price showing system of the first embodiment.
FIG. 5 shows an example of data components of a user database.
FIG. 6 shows an example of data components of a purchase result database.
FIG. 7 is a sequence chart showing an operation of the price showing system of the first embodiment.
FIG. 8 is a sequence chart showing an operation of the price showing system of the first embodiment.
FIG. 9 shows examples of a screen of the store application of the user terminal in a price showing system of a second embodiment.
FIG. 10 shows an example of data components of a user database of the second embodiment.
FIG. 11 illustrates a mechanism of a price showing system of a third embodiment.
FIG. 12 shows an example of a label that is issued by the price showing system of the third embodiment.
FIG. 13 shows an example of a screen of the store application of the user terminal in a modification example of the embodiments.
FIG. 14 shows an example of screen transition of the store application of the user terminal in a modification example of the embodiments.
FIG. 15 shows an example of screen transition of the store application of the user terminal in a modification example of the embodiments.
FIG. 16 shows an example of a screen of the store application of the user terminal in a modification example of the embodiments.
FIG. 17 shows an example of screen transition of the store application of the user terminal in a modification example of the embodiments.
FIG. 18 shows an example of screen transition of the store application of the user terminal in a modification example of the embodiments.
FIG. 19 is a sequence chart showing an operation of a price showing system of a modification example of the embodiments.
FIG. 20 shows an example of screen transition of the store application of the user terminal in a modification example of the embodiments.
FIG. 21 shows an example of data components of a user database of the modification example of the embodiments.
FIG. 22 shows an example of data components of an allergen database of the modification example of the embodiments.
FIG. 23 schematically shows a system configuration of a price showing system of a modification example of the embodiments.
FIG. 24 shows a display example of markdown indication codes of the price showing system of the modification example of the embodiments.

### DETAILED DESCRIPTION

The present invention is related to Japanese Patent Application Nos. 2020-094872, 2020-178673, and 2021-79115 respectively filed with the Japan Patent Office on May 29, 2020, on October 26, 2020, and on May 7, 2021, the entire contents of which are incorporated into this specification by reference.

In this disclosure, "product information" of a product means information for identifying the product. Examples of pieces of the product information include a product name, a product code, a product ID, and a product model. The product ID is identification information for identifying the product.

In this disclosure, "expiration information" of a product is information related to an expiration date that shows a reference whether a user can use, eat, or consume the product. Examples of the expiration date include a use-by date, a best-by date, a consume-by date, and a sell-by date.

In this disclosure, a "standard price" of a product means a product price used as a reference before a price change, such as a markdown, is made in a store. The following describes a regular price as an example of the standard price.

In this disclosure, the method of obtaining product information and expiration information from a product is not limited, and various kinds of methods can be employed.

In one example in which code information corresponding to product information and expiration information is shown on a product, the product information and the expiration information can be obtained by reading the code information. In another example in which textual information (human-readable text) corresponding to product information and expiration information is shown on a product, a photographic image containing the textual information is obtained, and the textual information is obtained from this photographic image by an image recognition technique. Herein, code information or textual information is shown on a product, such as by printing the code information or the textual information on a packaging material of the product, or attaching a print medium such as a label, which is printed with the code information or the textual information, to the product itself or to a packaging material of the product. The code information may be a one-dimensional code (bar code) or a two-dimensional code.

Note that the following describes an example of a case of obtaining product information and expiration information by reading a bar code shown on a product.

### (1) First Embodiment

Hereinafter, a price showing system being an example of an information processing system will be described.

The price showing system shows a product price (offered price) to a user, on a user terminal carried by the user in a store.

The user terminal is installed with a store application that is able to communicate with an application server. The store application obtains product information, such as a product ID, and expiration information, such as a best-by date, of a product, from code information shown on the product, and it then notifies these pieces of information to the application server. The application server determines an offered price of the product for the user, based on these pieces of information acquired from the store application, and it then notifies the determined offered price to the store application. The store application makes a display of the user terminal show the offered price of the product, which is notified by the application server, whereby the offered price is shown to the user.

In this system, the offered price that is shown to a user is determined in consideration of a best-by date of a product, etc., by the application server before it is shown to the user. This releases a store staff from the markdown work and improves work efficiency in a store.

### (1-1) System Configuration

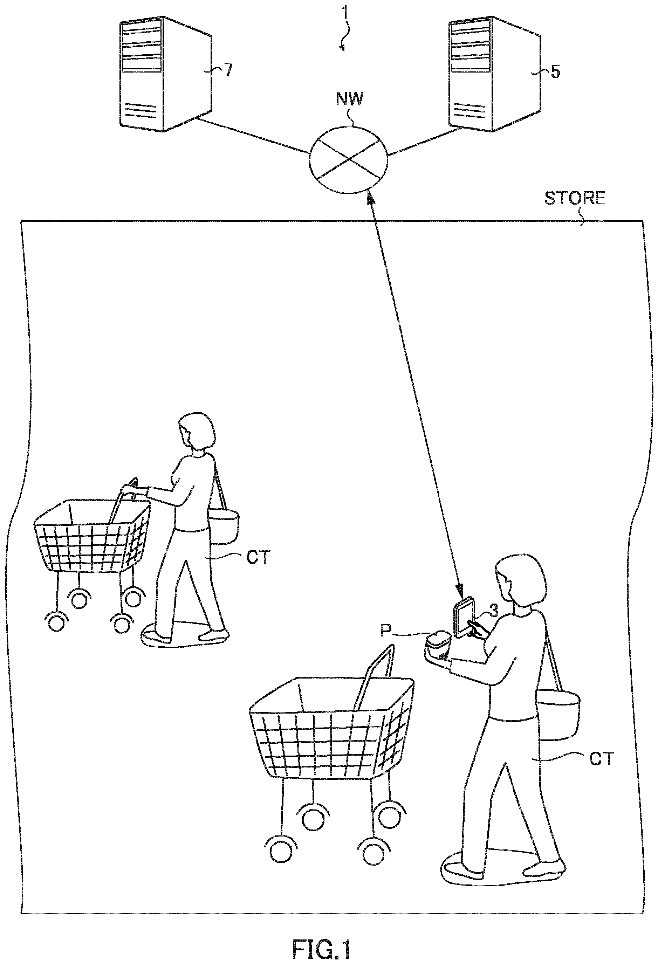

A system configuration of a price showing system 1 of this embodiment will be described with reference to FIG. 1.

As shown in FIG. 1, the price showing system 1 of this embodiment includes a user terminal 3 that is carried by a user CT who does shopping in a store, an application server 5, and a payment server 7, and it is configured to show prices of products in the store to the user CT. In the example of this embodiment, the store is a retail store such as a supermarket, which deals with foods having best-by dates, etc., as products.

The user terminal 3 is installed with a store application that shows prices of products in the store to the user CT who does shopping in the store. The user terminal 3 is able to communicate with the application server 5 via a network NW The network NW is, for example, the Internet, a local area network (LAN), or a wide area network (WAN).

The application server 5 performs a predetermined process in response to an inquiry or a request from the store application and returns a process result to the store application. An example of the predetermined process includes a process of determining a reduced price (an example of an offered price) to be offered to a user, based on product information and expiration information, such as a best-by date, which pieces of information are obtained from a product by the store application.

The payment server 7 is able to communicate with the application server 5 via the network NW and provides a service of receiving the payment for products of the user CT in the store on behalf of the user. In the case in which the user CT does not make a payment for products via the store application, the price showing system 1 of this embodiment does not need the payment server 7.

### (1-2) Usage of Store Application

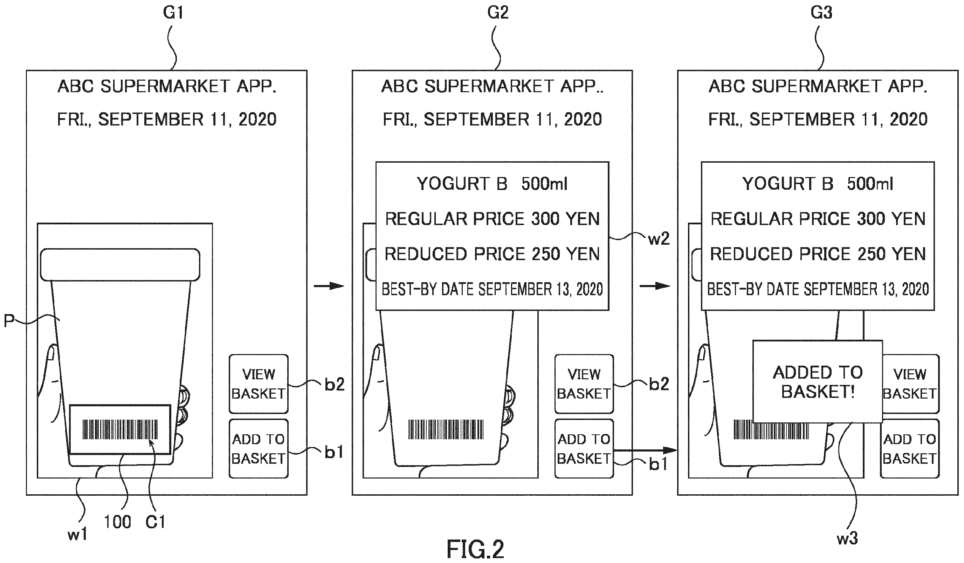

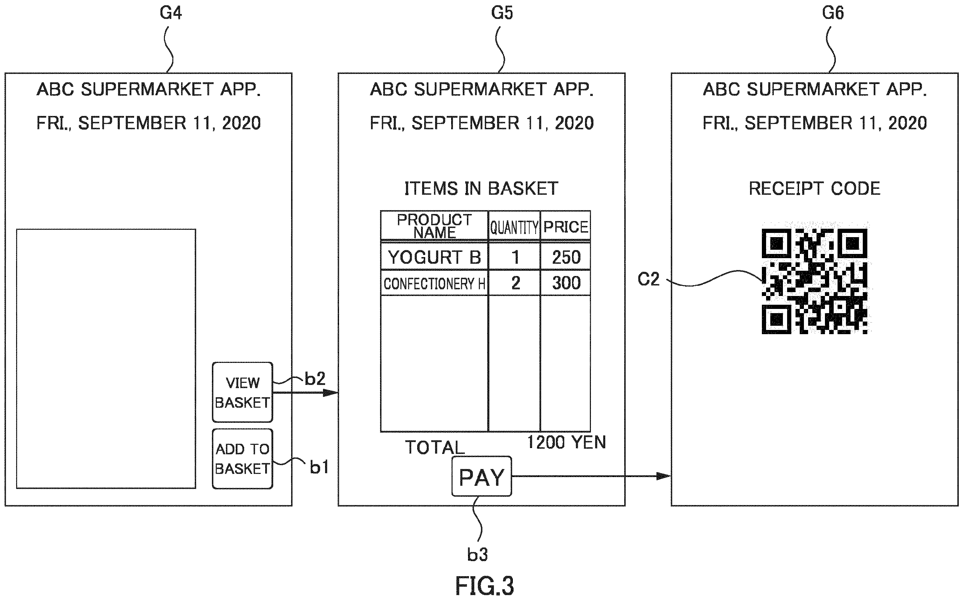

Next, a method of using the store application of the user terminal 3 will be described with reference to FIGs. 2 and 3. FIGs. 2 and 3 show examples of screen transition of the store application of the user terminal 3.

A user who executes the store application can check a regular price and a reduced price of each product in the store and can make a payment for products that the user has selected. Screens G1 to G3 in FIG. 2 show a method for a user to use the store application in order to check the price of a product and add the product to a purchase list (basket).

When a user activates the store application on the user terminal 3, an imaging function equipped on the user terminal 3 operates in a cooperative manner, and an obtained photographic image is displayed in a window w1, as shown in the screen G1 in FIG. 2. In the screen G1, the window w1 contains an image of a product "P" in the state in which the user is holding it so as to show code information C1 thereon after picking it up from a shelf in the store. Making the code information C1 of the product "P" appear in the window w1 (that is, performing scanning by the user) causes the store application to read (scan) the code information C1. In order to make target code information be reliably read even when a plurality of pieces of code information appear in the window w1, the imaging function of the user terminal 3 preferably includes a function of displaying a scan area 100 in the window w1. In this case, only code information C1 appearing in the scan area 100 is read among a plurality of pieces of code information in the window w1.

For example, the code information C1 contains information of a product ID (an example of product information) and a best-by date (best-by date information; an example of expiration information) of a corresponding product "P." Any type of code that contains a product ID and best-by date information can be used for the code information C1. For a bar code (one-dimensional code), CODE128, such as GS1-128, can be employed. The CODE128 enables bar coding all 128 characters of ASCII code, and thus, a bar code can be made so as to include a product ID and best-by date information.

A label that contains a GS1-128 code may be attached to each product in a store by automatically attaching labels in a batch with the use of an attaching robot or the like in a distribution center. In addition, a weight label containing a GS1-128 code may be attached in producing precooked foods or the like in a store. This procedure enables attaching a label that is printed with a GS1-128 code containing best-by date information, also to a product on which a code (e.g., JAN13) not containing best-by date information is directly printed.

After reading the code information C1, the store application transmits an inquiry about a reduced price of the product "P" for the user, which includes the product ID and the best-by date information contained in the code information C1, to the application server 5, and it acquires information of a regular price and a reduced price of the product "P" from the application server 5 and displays the information. In the screen G2 that is displayed subsequently to the screen G1, a window w2 contains information of a product name ("YOGURT B 500ml"), a regular price ("300 yen"), a reduced price ("250 yen"), and a best-by date ("September 13, 2020"), which corresponds to the product ID. In a case in which a product "P" having code information C1 that has been read is not a price-reduction target product, a notice that the product is not a price-reduction target, the scheduled date when the product becomes a price-reduction target, or other information, may be displayed. The window w2 may contain information of a reduced price and a rate of price reduction (or a rate of change) from a regular price. Displaying the information of a regular price or a rate of price reduction in addition to a reduced price enables the price reduction of the product to easily appeal to a user.

In addition to displaying a reduced price on the screen, the store application may notify a user by displaying a moving image, outputting a voice sound, or other method. The information of a reduced price, a rate of price reduction, etc., of a price-reduction target product may be displayed, for example, by using augmented reality (AR). For example, the information of a reduced price and a rate of price reduction may be superimposed on an image of a product displayed in the screen G2, as an AR display. Displaying the information of a reduced price and a rate of price reduction by using AR or the like enables the price reduction to more effectively appeal to a user.

In a case in which the store has a product having a best-by date closer than that of a product scanned by a user, the store application may display information related to the product, such as a reduced price of the product (a reduced price lower than that of the scanned product), the position of the product (e.g., the position of a shelf), and the quantity of stock of the product. In addition, the store application may display, for example, reduced prices for purchase of a plurality of (e.g., two) products (such as cartons of milk) close to the best-by date, or reduced prices for purchase of a combination of different types of products having close best-by dates. This can motivate a user to purchase products.

The best-by date that is contained in the code information C1 is reflected in the reduced price displayed in the window w2, each time the code information C1 of the product "P" is read. Thus, a store staff is released from the markdown work of each product in the store.

The user can select whether to add the product "P" to the purchase list (basket), by looking at the information contained in the window w2. In adding the product "P" to the purchase list, the user operates a button b1 ("ADD TO BASKET"; an example of a first operation target) displayed on the screen G2 to show the screen G3, and the user is notified of the addition of the product "P" to the purchase list (window w3). In this case, the user puts the picked-up product "P" in an actual basket or shopping cart of the store.

Screens G4 to G6 in FIG. 3 show a method for a user to use the store application in order to check the purchase list and make a payment for the products.

After the user checks a reduced price of a product and adds it to the purchase list (that is, after the user repeatedly shows the screens G1 to G3), the user can make a payment by operating a button b2 ("VIEW BASKET") in the screen G4 to show the screen G5 that contains a purchase list BL. The purchase list BL contains a list of products that have been added (product name of each product, quantity, price, etc.) and the total amount of prices. The price of a product that is shown in the purchase list BL is a reduced price for a price-reduction target product and is a regular price for a product that is not a price-reduction target product.

Although not shown in the drawing, in order to cancel a certain product from the purchase list BL due to, for example, exceeding the budget, the user can operate to delete the product from the purchase list BL. In this case, the user returns the canceled product from the basket or shopping cart of the store to the shelf of the store.

In the screen G5, the user can operate a button b3 (payment button; an example of a second operation target) to settle the purchase list BL. In response to this operation, the store application transmits a payment request (or a payment instruction) to the application server 5, whereby the payment process is completed on the network, as described later. After the payment process is completed, the store application displays the screen G6 that contains code information C2 as a receipt code. The receipt code represents that the payment for the products has been completed and contains a payment ID (described later) for identifying the payment transaction. Although an example of a two-dimensional code is shown as the receipt code, a bar code or the like may be used.

The receipt code is used to notify the store or a store staff of the completion of payment for the products in the basket.

For example, the store may be configured to allow the user to leave the store after the user shows the receipt code to a store staff, or a gate may be opened to allow the user to leave the store, by causing a predetermined device in the store to read the receipt code. Under these conditions, the user does not need to line up at a checkout counter, as well as a checkout staff of the store does not need to receive a payment for products, and therefore, such a procedure is useful for the user and the store.

A checkout staff of the store may read the receipt code by using a scanner or the like, to allow the user to pass through the checkout counter. Even in this case, the checkout staff of the store does not need to read code information of every product in a basket, as well as the user can pass through the checkout counter in a short time, and therefore, even this procedure is useful for the user and the store.

### (1-3) Configuration of Each Device of System

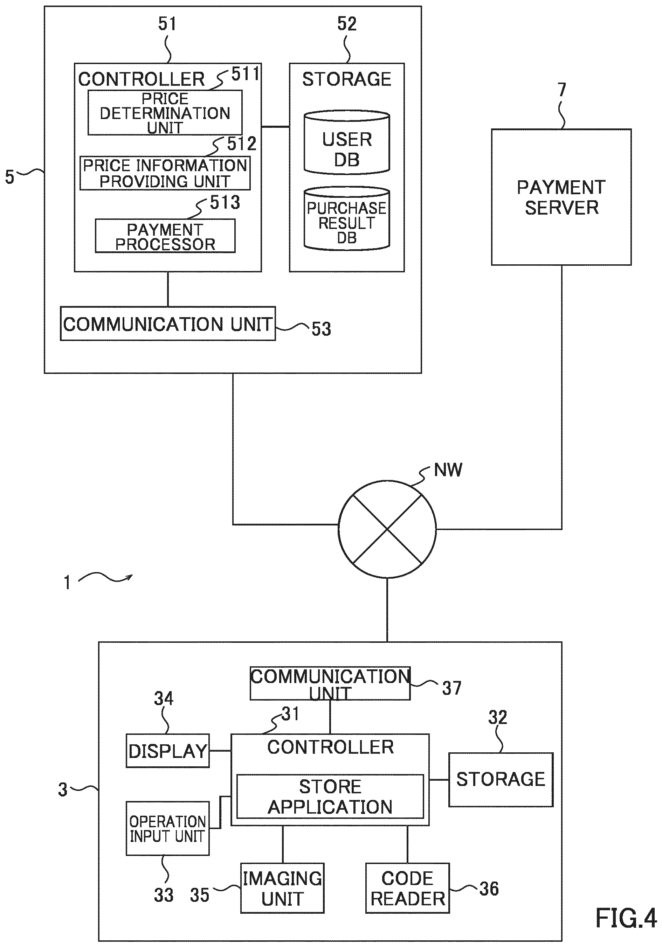

Next, a configuration of each device of the price showing system 1 of this embodiment will be described with reference to FIG. 4. FIG. 4 is a block diagram including internal configurations of the user terminal 3 and the application server 5 in the price showing system 1 of this embodiment.

### (1-3-1) User Terminal 3

As shown in FIG. 4, the user terminal 3 includes a controller 31, a storage 32, an operation input unit 33, a display 34, an imaging unit 35, a code reader 36, and a communication unit 37. The user terminal 3 may be a smartphone, a tablet terminal, a smart watch or other wearable device, or the like.

The controller 31 is composed mainly of a microprocessor and controls the whole user terminal 3. In one example, the microprocessor contained in the controller 31 loads and executes a program of the store application recorded in the storage 32 and displays the execution result on the display 34.

The storage 32 is a non-volatile memory and may be a solid state drive (SSD), such as a flash memory. The storage 32 stores, in addition to the program of the store application, data and file that are created by executing the store application, and so on.

The controller 31 executes the store application to implement the following functions.
(1-i) Obtain product information, best-by date information, etc., of a product from code information or the like shown on the product.
(1-ii) Transmit a price inquiry about information of a reduced price of a product for a user, to the application server 5 (that is, request information of a reduced price of a product).
(1-iii) Receive (acquire) information of a reduced price of a product from the application server 5 and function as a display controller that makes the display 34 display the acquired information of the reduced price of the product.

The display controller makes the display 34 display various pieces of information by executing the store application, in addition to information of a reduced price.

Additionally, the controller 31 may have a function of outputting a reduced price of a product with the use of a voice sound, instead of or in addition to making the display 34 display information of the reduced price of the product. In this case, the user terminal 3 includes a voice sound processor and a speaker.

The operation input unit 33 is, for example, a touch panel input device that is provided to a display panel of the user terminal 3. The operation input unit 33 notifies the store application of operation input to the display panel.

The display 34 has, for example, a liquid crystal display panel or an organic EL panel, and it shows an execution result of the store application. The display 34 also displays a digital image signal that is generated by the imaging unit 35.

The imaging unit 35 has, for example, an optical lens and an imaging device (image sensor) that converts incident light from the optical lens into an electric signal, and it successively generates a digital image and outputs the digital image to the display 34.

The code reader 36 analyzes code information or the like, which is contained in the image signal generated by the imaging unit 35, and it then extracts (obtains) data (that is, product information, such as a product ID, and best-by date information), for example, from the code information.

The communication unit 37 is a communication interface for communicating with the application server 5.

### (1-3-2) Application Server 5

As shown in FIG. 4, the application server 5 includes a controller 51, a storage 52, and a communication unit 53.

The controller 51 is composed mainly of a microprocessor and controls the whole application server 5. In one example, the microprocessor contained in the controller 51 loads and executes a server program recorded in the storage 52.

The storage 52 is a mass storage device, such as a hard disk drive (HDD), and it stores a user database (user DB) and a purchase result database (purchase result DB) in addition to the server program. The user database and the purchase result database are accessed by the controller 51, as appropriate, when the controller 51 executes the server program. Details of the user database and the purchase result database will be described later by using examples.

Although not shown in the drawing, the storage 52 stores data of a regular price (that is, data of a regular price corresponding to each product ID) of each product sold in a store. The data of the regular price is referred to by the controller 51 in determining a reduced price.

The communication unit 53 is a communication interface for communicating with the user terminal 3 and the payment server 7.

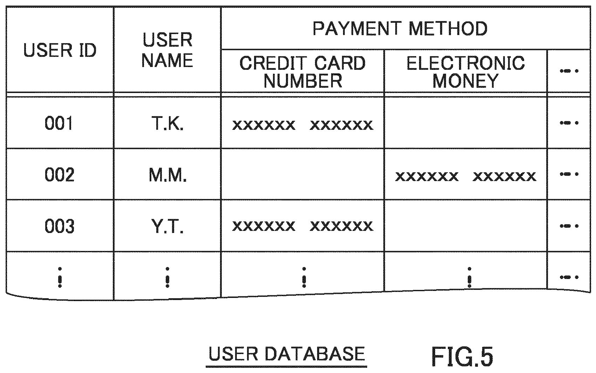

FIG. 5 shows an example of components of a user database.

Each record of the user database illustrated in FIG. 5 includes a value of each of these fields: "USER ID," "USER NAME," and "PAYMENT METHOD." Herein, the value in the "USER ID" field is identification information assigned to a user. The value in the "USER NAME" field is acquired based on input operation of a user and is recorded in the user database at the time the user installs the store application in the user terminal 3. The value in the "PAYMENT METHOD" field is acquired based on input operation of a user and is recorded or updated in the user database at the time the user installs the store application in the user terminal 3 or at any time after the store application is installed.

The value in the "PAYMENT METHOD" field is data necessary to receive a payment for a product from a user, which is, for example, information of a credit card number and/or information related to electronic money (e.g., a prepaid number). The value in the "PAYMENT METHOD" field is provided to the payment server 7 when a user of a corresponding user ID makes a payment.

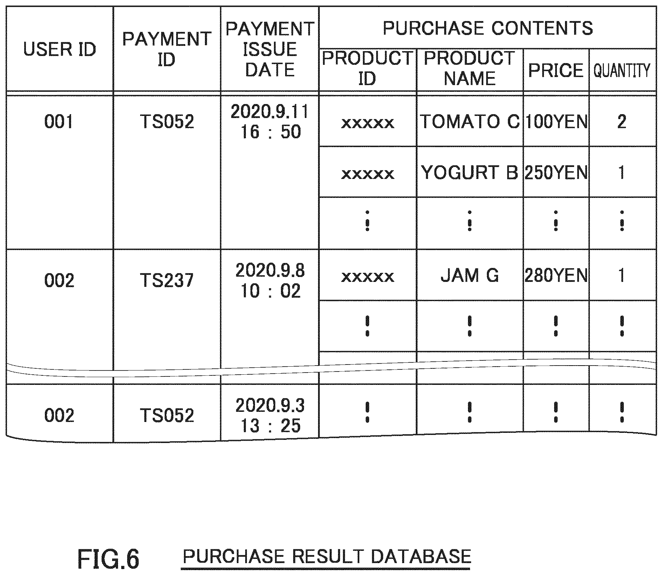

FIG. 6 shows an example of components of a purchase result database.

Each record of the purchase result database illustrated in FIG. 6 includes a value of each of these fields: "USER ID," "PAYMENT ID," "PAYMENT ISSUE DATE," and "PURCHASE CONTENTS." Herein, the value in the "PAYMENT ID" field is data that is uniquely assigned to each payment of a corresponding user. The value in the "PAYMENT ISSUE DATE" field shows date and time when a payment that is identified by a payment ID is issued.

The "PURCHASE CONTENTS" field includes subfields: "PRODUCT ID," "PRODUCT NAME," "PRICE," and "QUANTITY" The value of each subfield shows data of details of purchase contents of a payment identified by a payment ID.

The store has a POS system (not shown) that retrieves data from the purchase result database to aggregate data of sales using the store application and data of sales paid without using the store application.

The controller 51 executes the server program to implement functions of a price determination unit 511, a price information providing unit 512, and a payment processor 513.

The price determination unit 511 determines a reduced price by changing a regular price of a product based on at least one piece of information of a product ID and best-by date information, which are obtained by the store application of the user terminal 3. For example, in order to avoid having unsold products, the price is reduced more as the best-by date is closer. Some products may be reduced in price irrespective of the best-by date, and in this case, the reduced price is determined based only on the product ID.

The price determination unit 511 preferably uses a predetermined algorithm to calculate a price. The calculation of a reduced price of a product by using an algorithm is performed in consideration of various pieces of information such as climate, store location, stock status, and past sales history, as well as the best-by date of the product. Such an algorithm can be executed also by artificial intelligence.

The reduced price of a product can be determined from various points of view.

In one example, the price determination unit 511 may determine a reduced price of a product based on at least one of a product ID, best-by date information, and information related to a user. Thus, it is possible to have flexibility in determining a reduced price in accordance with attributes of a user.

Herein, the information related to a user is information such as age, gender, and address of the user. The store application obtains information related to a user, for example, in response to input operation of the user, and it transmits the obtained information related to the user to the application server 5. The application server 5 records the received information related to the user, for example, in the user database.

In one example, in a case in which the information related to a user shows a user's age that is in a target age range of a product, price reduction of the product may be greater than that performed for a user whose age is not in the target age range of the product. In a case in which the information related to a user shows that the user is male, price reduction of a product for men may be greater than that performed for a female user.

The price determination unit 511 may determine a reduced price of a product based on a product ID and closing time of a store that sells the product. This increases the possibility of selling out all stock of the product before the store is closed. In one example, a reduced price of a certain product may be decreased as the closing time of the store approaches. The certain product is one that the store hopes to sell before the closing time, and examples thereof include box lunches and precooked foods.

The price determination unit 511 may determine a reduced price based on a product ID, the time of receiving a price inquiry from the store application (that is, the time a user scans a product), closing time of the store, and the quantity of stock in the store of the product corresponding to the product ID. This further increases the possibility of selling out all stock of the product before the store is closed. In one example, a reduced price may be decreased as the time from the time of receiving a price inquiry to the closing time of the store is shorter, and a degree of price reduction may be increased as the quantity of stock of the product is greater. The relationship between the time from the time of receiving a price inquiry to the closing time of the store and the degree of price reduction, or the relationship between the quantity of stock of the product and the degree of price reduction, may be varied depending on product. For products that must be sold out, a greater degree of price reduction is preferable.

The price information providing unit 512 provides information that contains a reduced price of a product determined by the price determination unit 511, to the user terminal 3. The price information providing unit 512 provides information that contains a reduced price of a product, for example, to the store application of the user terminal 3. In one example, the information that is contained in the screens G2 and G3 in FIG. 2 is provided by the price information providing unit 512.

The payment processor 513 performs a payment process added to the purchase list, in conjunction with the payment server 7, in response to instruction operated to the payment button (that is, payment request) obtained from the user terminal 3. The payment processor 513 retrieves data of a user name and a payment method from the user database and provides the data to the payment server 7. In addition, the payment processor 513 creates a new record in the purchase result database upon receiving the payment request from the store application.

### (1-4) Operation of Price Showing System 1

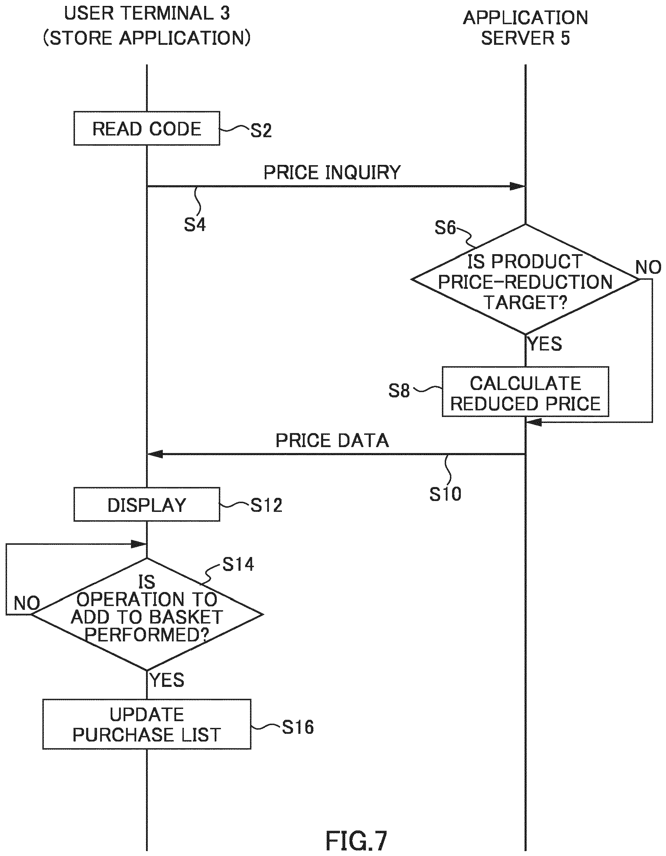

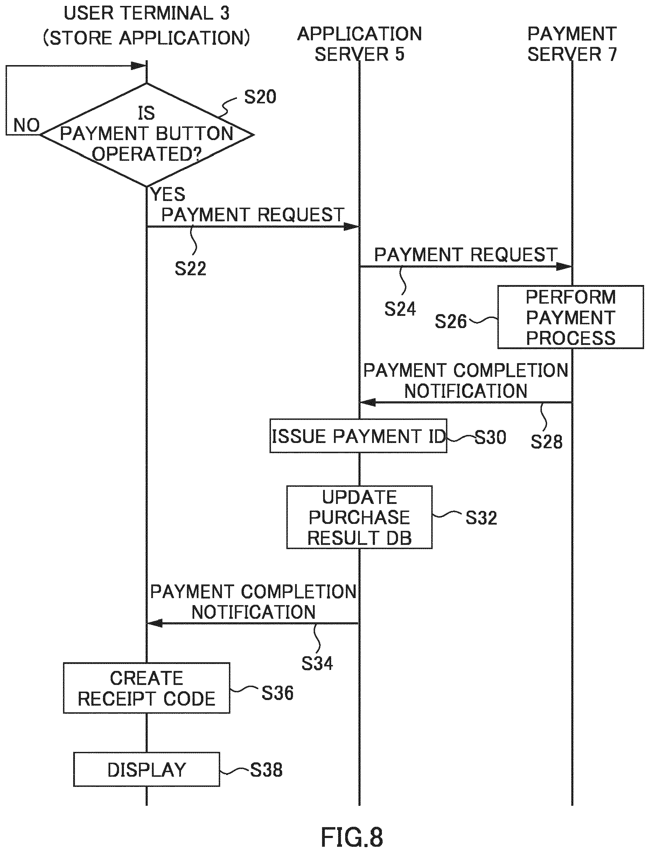

Next, operation of the price showing system 1 of this embodiment will be described with reference to FIGs. 7 and 8. FIG. 7 is a sequence chart showing an operation of the price showing system 1 in the situation in which a user checks the price of a product and adds the product to a purchase list. FIG. 8 is a sequence chart showing an operation of the price showing system 1 in the situation in which the user makes a payment for products.

First, with reference to FIG. 7, in response to a user making the user terminal 3 display code information of a product that the user has picked up from a shelf of a store, for example, as shown in the screen G1 in FIG. 2, the store application reads (scans), for example, the code information (step S2). This code information contains, for example, a product ID and best-by date information of the product.

After obtaining a product ID and best-by date information from the product, the store application transmits a price inquiry that contains the product ID and the best-by date information, to the application server 5 (step S4). The product that corresponds to the product ID contained in the received price inquiry may be a price-reduction target (step S6: YES). In this case, the application server 5 calculates a reduced price by changing a regular price of the product based on at least one piece of information of the product ID and the best-by date information contained in the price inquiry (step S8).

In the case in which the product corresponding to the product ID contained in the price inquiry is not a price-reduction target, a reduced price is not calculated (step S6: NO).

Then, the application server 5 returns price data and so on in association with the product ID, to the store application (step S10). The price data of the price-reduction target product contains data of the regular price and the reduced price. The price data of the product that is not a price-reduction target contains data of the regular price.

Upon receiving the price data, for example, as shown in the screen G2 in FIG. 2, the store application displays the regular price, the reduced price, the best-by date information, etc., of the product on the user terminal 3 (step S12).

In response to operation to the button b1 ("ADD TO BASKET"), for example, in the screen G2 in FIG. 2 (step S14: YES), the store application updates the purchase list so as to add the product shown in step S12 to the purchase list (step S16).

Next, with reference to FIG. 8, in response to the user operating the payment button, for example, as shown in the screen G5 in FIG. 3 (step S20: YES), the store application transmits a payment request including the displayed purchase list, to the application server 5 (step S22). Upon receiving the payment request from the store application, the application server 5 retrieves data of a user name and a payment method from the user database and transmits a payment request that includes the retrieved data of the user name and the payment method and data of a payment amount (total amount of prices in the purchase list), to the payment server 7 (step S24). The payment server 7 performs a payment process based on the data provided from the application server 5 (step S26). After completing the payment process, the payment server 7 then transmits a payment completion notification to the application server 5 (step S28).

After the payment is completed, the application server 5 issues a new payment ID (step S30) and creates a new record in the purchase result database to update the purchase result database (step S32).

Subsequently, the application server 5 transmits a payment completion notification corresponding to the payment request in step S22, to the store application (step S34). This payment completion notification includes the payment ID that is issued in step S30. The store application creates a receipt code that is a two-dimensional code containing the payment ID, which is included in the received payment completion notification (step S36). Then, the store application displays the receipt code on the user terminal 3, for example, as shown in the screen G6 in FIG. 3 (step S38).

As described above, the price showing system 1 of this embodiment enables a user to recognize a reduced price of a product by using the user terminal 3, in a store. Specifically, the store application of the user terminal 3 obtains a product ID, best-by date information, etc., from code information of a product and transmits these pieces of information to the application server 5. The application server 5 determines a reduced price based on the received information such as the product ID and the best-by date information, and it returns information of the reduced price to the store application. The store application displays the information of the reduced price, which is received from the application server 5.

Thus, the price showing system 1 of this embodiment provides the following advantageous effects.
(i) It is not necessary for a store staff to perform the markdown work of attaching a label printed with a reduced price, to a product, as a best-by date approaches. Thus, the store can significantly reduce working expenses and personnel expenses. As a result, it is possible to improve efficiency of work in the store.
   In a case in which code information containing best-by date information (e.g., a GS1-128 code) is not attached to products, the code information containing the best-by date information can be attached by affixing labels in a batch in a distribution center or the like, or by affixing weight labels in a store.
(ii) The application server 5 determines an optimal reduced price of a product, which effectively prevents the product from being unsold and being disposed.
(iii) It is possible to eliminate the markdown work in a store and to reduce checkout staffs by using a cashless payment system. Thus, the saving of personnel expenses in the store can be returned to a user who uses the store application, by reducing a price of a product.
(iv) It is possible for a user to scan a product and make a payment for the product by him- or herself by using the store application, whereby the time for the user to wait for checkout can be greatly decreased in a store. In addition, the number of times that a user passes through a checkout counter is reduced, and thus, the situations that a person touches another person in the store are greatly decreased.
(v) The time for a user to wait for checkout in a store is greatly reduced, which is expected to improve customer satisfaction for the store and to increase the frequency of visit to the store of a user.
(vi) In this embodiment, the method of reading code information is described as an example of the method of obtaining a product ID and best-by date information from a product. This method is inexpensive compared with an obtaining method using wireless communication, such as RFID, and an obtaining method using image recognition technology.
(vii) A degree of price reduction of a product for a user who uses the store application can be increased more than that for a user who does not use the store application. Such flexibility in setting a degree of price reduction cannot be achieved in an existing method of showing a reduced price, for example, by using an electronic shelf label.

### (2) Second Embodiment

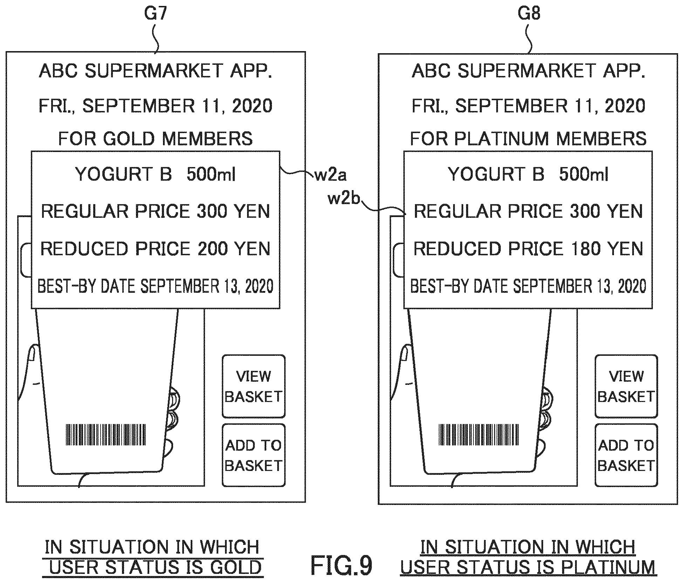

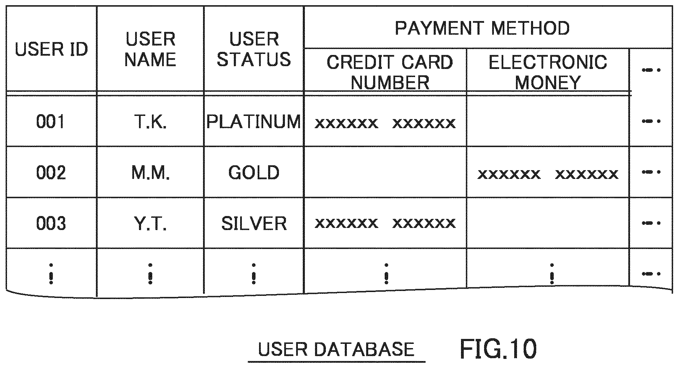

Next, a price showing system of a second embodiment will be described with reference to FIGs. 9 and 10. Note that each of the following embodiments is described by focusing on differences from the first embodiment.

The price showing system of this embodiment is different from the price showing system 1 of the first embodiment in that a reduced price shown to a user may be varied depending on a user status (an example of a category). The user status can be set from various points of view. For example, the user status can be determined depending on purchase results of products of a user, attributes of a user (age, gender, whether a user is a person who requires nursing care, and so on), result of a user inviting another user, etc.

In this embodiment, the controller 51 of the application server 5 functions as an association unit that associates a user with one of a plurality of user statuses. The price determination unit 511 (refer to FIG. 4) determines a reduced price of a product based on the user status associated by the association unit.

For example, it is assumed that the user statuses are classified into a platinum status, a gold status, and a silver status (level of loyalty of customer decreases in this order). On the basis of this assumption, FIG. 9 shows examples of reduced prices shown to a user whose user status is gold (screen G7) and to a user whose user status is platinum (screen G8). Each of the screens G7 and G8 is a screen corresponding to the screen G2 in FIG. 2.

In the examples in FIG. 9, the reduced price ("180 YEN") for a platinum member in the window w2b of the screen G8 is lower than the reduced price ("200 YEN") for a gold member in the window w2a of the screen G7. Thus, the platinum member can receive a preferential treatment better than the gold member.

An example of a user database of this embodiment is shown in FIG. 10.

Compared with the user database (refer to FIG. 5) of the first embodiment, the user database in FIG. 10 is different in that a value of a "USER STATUS" field is added in each record. The value in the "USER STATUS" field is data that represents, for example, a platinum status, a gold status, and a silver status.

In one example in which the user status is determined based on purchase results of products of a user, the controller 51 of the application server 5 refers to the purchase result database (refer to FIG. 6). The user status of each user can be determined by calculating a grand total of purchase results of each user from the purchase result database and comparing the resultant grand total with a threshold corresponding to each user status.

In the price showing system of this embodiment, the application server 5 determines a reduced price depending on the user status. For example, the price determination unit 511 of the application server 5 of the first embodiment may calculate a reduced price as a price for a silver member. In this case, a reduced price for each of a gold member and a platinum member can be set by lowering the reduced price for a silver member by a predetermined amount or a predetermined rate.

The price showing system of this embodiment makes it possible to flexibly set a reduced price to be offered to a user, depending on the user status. In particular, determining and updating the user status based on purchase results of products of a user promotes a user to purchase a product in a store. In addition, offering a better preferential treatment to a user having a higher user status contributes to retaining loyal customers.

### (3) Third Embodiment

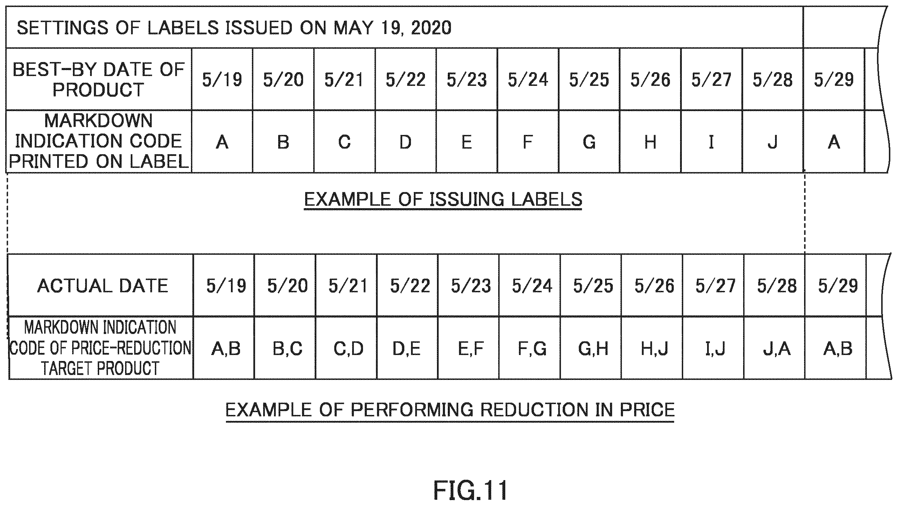

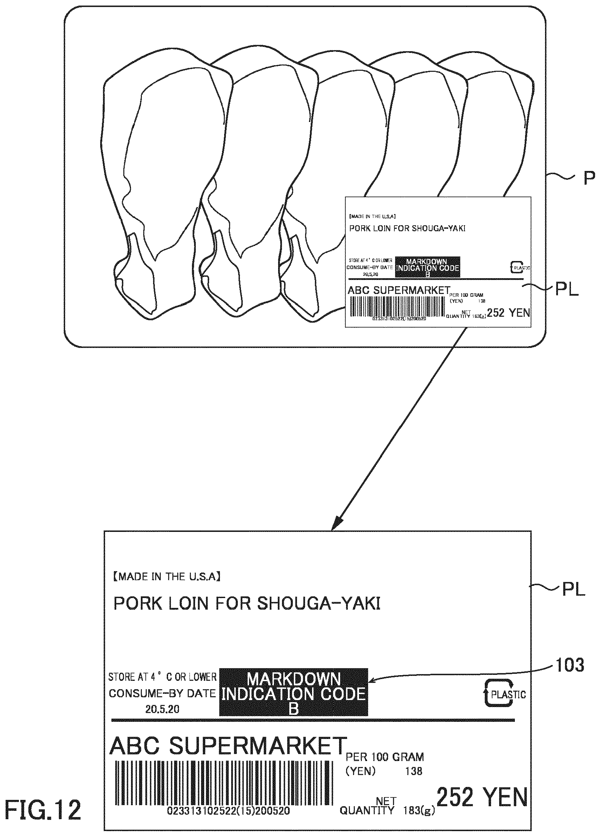

Next, a price showing system of a third embodiment will be described with reference to FIGs. 11 and 12.

The price showing system of each of the first and the second embodiments enables a user to recognize a reduced price by self-operation of reading code information of a product. However, if there is a system that enables a user to preliminarily recognize a price-reduction target product among products in a store, the user does not need to read code information each time but needs to read code information of only the price-reduction target product. Thus, such a system is convenient for a user. From this point of view, in this embodiment, a store staff preliminarily issues a label that is printed with a markdown indication code for showing whether a product is a price-reduction target product (label with a markdown indication code), and the store staff attaches this label to the product. After a user understands that the product is a price-reduction target product, from the markdown indication code on the label attached to the product, the user can read code information or the like of the product printed on the label.

The price showing system of this embodiment includes a printer that is configured to print mutually different markdown indication codes on labels, which are to be attached to at least two products having different best-by dates.

In the price showing system of this embodiment, the application server 5 transmits instruction signals for making the printer print a plurality of labels with a markdown indication code, as illustrated in FIG. 11. The printer prints and issues a plurality of labels with a markdown indication code, based on the instruction signals.

FIG. 11 shows an example of setting markdown indication codes to be printed on labels ("EXAMPLE OF ISSUING LABELS") and an example of setting markdown indication codes of price-reduction target products in a store ("EXAMPLE OF PERFORMING REDUCTION IN PRICE"). The following describes these examples.

A plurality of markdown indication codes are provided depending on a period before a best-by date of a product (e.g., the number of days).

Specifically, FIG. 11 shows an example in which ten types of markdown indication codes, A to J, are assigned to products each having a best-by date within nine days from the current day, on May 19, 2020 (that is, an example of printing and issuing ten types of labels with a markdown indication code). In more detail, on May 19, 2020, labels are collectively issued and attached to products each having a best-by date within nine days from the current day. In this example, after once the labels are attached to the products having a best-by date within nine days, it is not necessary to issue other labels such as markdown labels.

FIG. 12 shows an example of a label PL that is issued for a product "P" in which a best-by date is May 20, 2020, under these conditions. FIG. 12 shows an example of attaching a weight label PL to a product "P," and a markdown indication code "B" is printed at a markdown indication code displaying area 103 of the label PL.

The markdown indication code of a price-reduction target product in FIG. 11 is changed, for example, depending on the number of actual days passed, and it is notified to a user at a front of a store, in a store, or through the store application. The markdown indication code for a price-reduction target product of the day that a user comes to a store may be written on a board at a front of the store or in the store by a store staff or may be displayed on an electronic shelf label.

The markdown indication code for a price-reduction target product of that day may be displayed when the store application is activated. In this case, the store application receives a markdown indication code of that day from the application server 5 and displays it at the time of activation.

In the example in FIG. 11, on May 19, 2020, price-reduction target products among products in the store are products having labels printed with a markdown indication code "A" or "B." In addition, on the next day, May 20, 2020, price-reduction target products among products in the store are products having labels printed with a markdown indication code "B" or "C." The same applies to the days from May 21, 2020 to May 28, 2020.

In short, in the example of performing reduction in price in FIG. 11, it is configured that products having a best-by date that is the current day or the next day are set as price-reduction target products.

In one example, a user who comes to the store on May 25, 2020, is notified that the markdown indication code of that day is "G" or "H," at a front of the store, in the store, or through the store application. Then, the user can recognize that a product attached with a label printed with a markdown indication code "G" or "H" is a price-reduction target product of that day, among products in the store. Thus, the user only has to read (scan) code information of only the price-reduction target product among products in the store, whereby convenience for the user is improved. In addition, setting the markdown indication codes can motivate a user to actively scan products in the store. That is, a user can recognize a reduced price of a product depending on a best-by date or the like, with the use of the user terminal 3, in the same manner as in the first and the second embodiments, by reading code information or the like of the price-reduction target product attached with a label printed with a markdown indication code.

On the other hand, it is not necessary for a store staff to attach a markdown label to a product after once a label is attached to the product, and therefore, efficiency of work in the store can be improved as in the case of the first and the second embodiments.

Although FIG. 11 shows ten types of markdown indication codes, the number of the types is not limited thereto. The number of the types of markdown indication codes is determined in accordance with operation of a store, as appropriate.

Although different markdown indication codes are assigned to different best-by dates in FIG. 11, the method of assignment is not limited to this. The same markdown indication code may be assigned to different best-by dates. Specifically, in the example in FIG. 11, the markdown indication code may be assigned such that the markdown indication code for days from May 19 to May 21 is "A," and the markdown indication code for days from May 22 to May 24 is "B."

The markdown indication code is an example of markdown indication information. The markdown indication information is not limited to the characters, such as "A" to "J," and may be symbols, signs, marks, emblems, patterns, or the like.

Change of the markdown indication code is not limited to a daily basis but may be performed on an hourly basis. For example, for products that are manufactured multiple times a day, such as precooked foods and box lunches, the markdown indication codes may be changed multiple times a day. Specifically, products may be manufactured three times a day: 8 o'clock, 12 o'clock, and 16 o'clock. In this case, it is assumed that the markdown indication codes to be printed on labels attached to the products are "A," "B," and "C," a best-by date of products manufactured at 8 o'clock is 16 o'clock of the same day, and a best-by date of products manufactured at 12 o'clock is 20 o'clock of the same day. Under these conditions, for example, the markdown indication code for a price-reduction target product may be "A" between 12 and 16 o'clock, and the markdown indication code for a price-reduction target product may be "B" between 16 and 20 o'clock. Changing the markdown indication code on an hourly basis in this manner eliminates the need for a store employee to perform operation, such as frequently attaching markdown labels to products having a short best-by date. Thus, efficiency of work is significantly improved.

### (4) Modification Examples of Embodiments

Next, a price showing system of each of modification examples of the embodiments will be described.

### (4-1) First Modification Example

Hereinafter, a first modification example will be described.

Although the first and the second embodiments are described by using a case in which the application server 5 determines a reduced price of a product, the price determination unit 511 of the application server 5 may determine an application start time of the reduced price. The information showing the determined application start time of the reduced price is transmitted from the application server 5 to the store application and is displayed on the display 34 of the user terminal 3. That is, the controller 31 of the user terminal 3 may function as a display controller that makes the display 34 display the information showing an application start time of a reduced price of a product.

In this modification example, the price determination unit 511 of the application server 5 determines an application start time of a reduced price of a product based on closing time of a store that sells the product and the quantity of stock of the product.

For example, the application start time of a reduced price of a product may be a predetermined time before the closing time of the store. In this case, the predetermined time may be earlier as the quantity of stock of the product (quantity of stock of unsold products) is greater. That is, in the case of having a large quantity of stock of the product, advancing the application start time increases the possibility of selling out all stock of the product before the closing time comes.

In the second embodiment, the application start time of a reduced price of a certain product may be set earlier for a user having a higher user status than for a user having a lower user status. In one example, the application start time of a reduced price may be changed as follows: it is 15 o'clock of the same day for platinum members, it is 16 o'clock of the same day for gold members, and it is 17 o'clock of the same day for silver members. The application start time of a reduced price is notified to a user by the store application, for example, at the time the screen G7 or G8 in FIG. 9 is displayed, but the notification time is not limited to this. In one example, in order to notify a price-reduction product, etc., from a store to a user (member), a reduced price and a price reduction start time for each customer status may be notified to the user in advance.

The application start time of a reduced price for each user status may be shown irrespective of the user status of a user. This can provide a sense of superiority to a user having a relatively higher user status due to knowing that a reduced price is applied to the user earlier than other person, which motivates the user to come to the store again. On the other hand, the store can retain a user having a higher user status.

The length of time during which a reduced price is applied may be varied depending on the user status. In one example, the length of time may be varied as follows: it is 3 hours for platinum members, it is 2 hours for gold members, and it is 1 hour for silver members. With this method, it is also possible to treat a user having a higher user status better than a user having a lower user status.

### (4-2) Second Modification Example

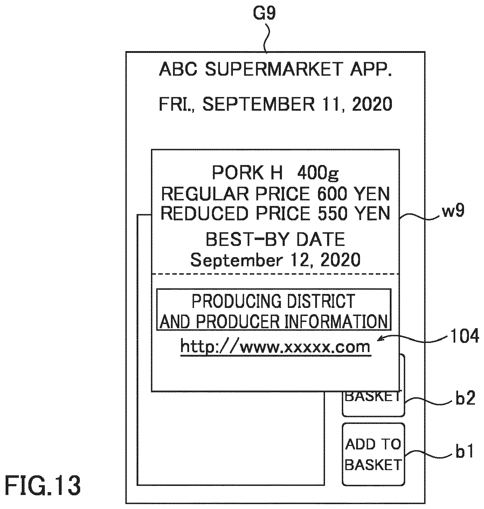

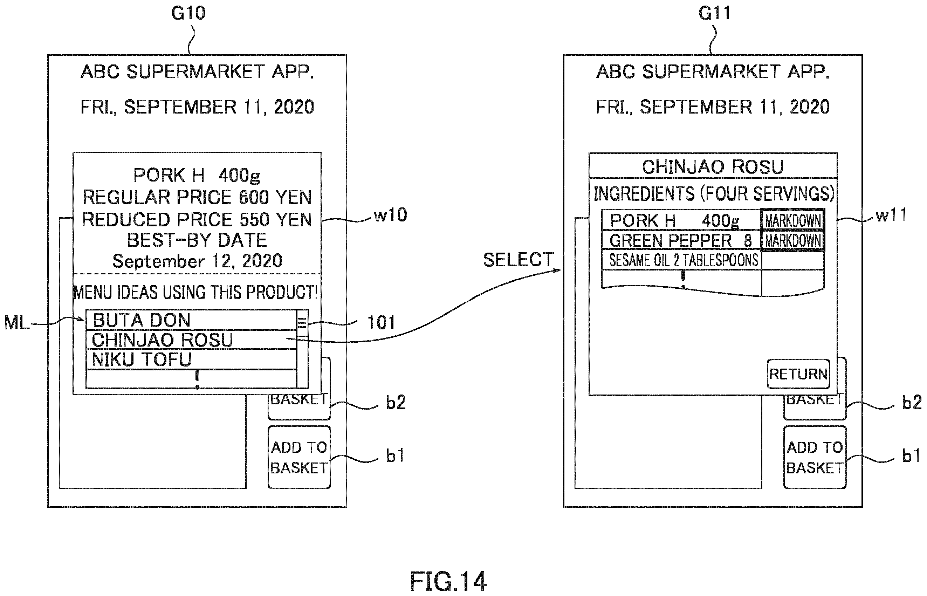

Next, a second modification example will be described with reference to FIGs. 13 and 14.

In this modification example, at the time a reduced price of a product is shown to a user, information related to the product is also displayed.

A screen G9 illustrated in FIG. 13 is a screen that is displayed on the user terminal 3 by the store application so as to show a reduced price to a user, as in the case of the screen G2 in FIG. 2. The screen G9 has a window w9 that shows, in addition to information of a product name, a regular price, a reduced price, and a best-by date, link information 104 for showing producing district and producer information of the product, as the information related to the product. In this example, the user can display a web page containing the producing district and producer information of the product by operating the link information 104. Thus, the user can confirm safety of the product before adding the product to the purchase list.

A screen G10 illustrated in FIG. 14 is a screen that is displayed by the store application so as to show a reduced price to a user, as in the case of the screen G2 in FIG. 2. The screen G10 has a window w10 that shows, in addition to information of a product name, a regular price, a reduced price, and a best-by date, a menu list ML of dishes that use the product, as the information related to the product. The menu list ML may be provided with a scroll bar 101 for showing a lot of dishes. The user can consider the usage of the target product due to the menu list ML displayed. Thus, the user can timely obtain information useful for determining whether to add the product, which is displayed in the window w10, to the purchase list (basket), whereby customer satisfaction and customer's willingness to visit the store next time are improved.

In response to operation of selecting one dish ("CHINJAO ROSU" in the example in FIG. 14) from among a plurality of dishes in the menu list ML in the window w10, a screen G11 is displayed on the user terminal 3.

The screen G11 includes a window w11 that shows a list of ingredients necessary to make the selected dish. Under these conditions, in a case in which the necessary ingredients include price-reduction target products, information for notifying the price-reduction target product (a character string "MARKDOWN" in the example in the screen G11 in FIG. 14) may be displayed. With this information, the store can induce the user to additionally purchase a product. In addition, this information is useful also for the user because the user can recognize a dish in which ingredients can be prepared at a lower cost, in the menu list ML.

In displaying the screen G11, the store application may inquire the application server 5 about whether each ingredient is a price-reduction target product.

### (4-3) Third Modification Example

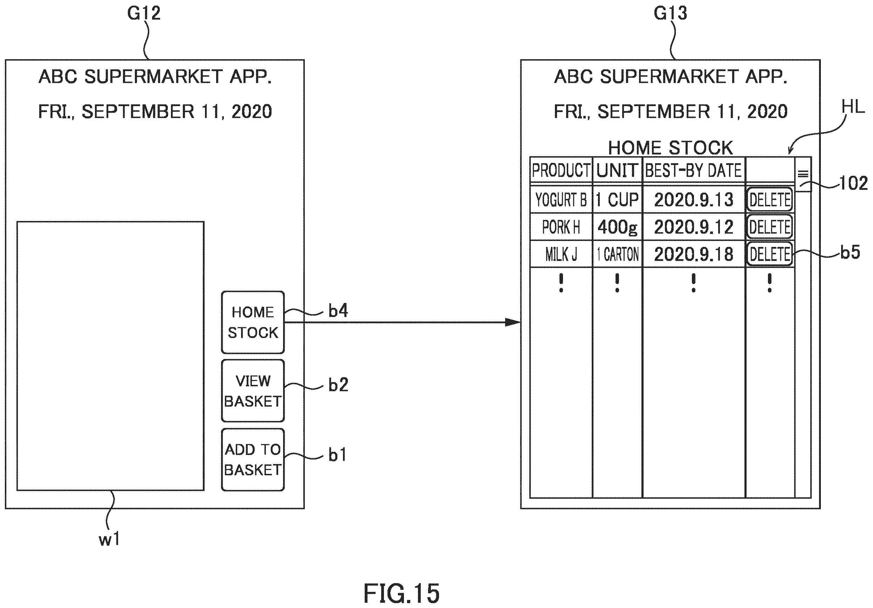

Next, a third modification example will be described with reference to FIG. 15.

In this modification example, the store application provides a function of managing a home stock of a user.

In this modification example, in one case, the storage 32 of the user terminal 3 stores a home stock database of products. The store application adds data of each product contained in the purchase list, to the home stock database, each time the payment for the products in the purchase list is completed. In the case in which the product is consumed or disposed by a user, the store application deletes the product selected in the home stock database, from the home stock database, for example, in accordance with operation of the user.

In this modification example, the home stock database of a user may be stored, for example, in the application server 5.

FIG. 15 illustrates a method of using the store application in order to manage a home stock. In this modification example, as shown in a screen G12 in FIG. 15, a button b4 ("HOME STOCK") is added to the store application. In response to operation to the button b4, a screen G13 having a home stock list HL is displayed. The home stock list HL is a list of products reflecting the home stock database. The products that are contained in the home stock list HL may not be displayed on one screen, but all of the products can be viewed by using a scroll bar 102. In the case of consuming or disposing a product at home, a user can delete the corresponding product from the home stock list HL (that is, delete it from the home stock database) by operating a button b5 ("DELETE") or the like.

In this modification example, how many products are in stock in home of a user and when the best-by dates of the products expire are visualized, which can contribute to, for example, reduction of food waste at home. In addition, a user can obtain data by scanning a product in a store by him- or herself, and this data is reflected in the home stock database. Thus, an effort to create a home stock database is substantially not necessary.

In a case in which a household-account management application is installed in the user terminal 3, the store application may operate in conjunction with the household-account management application. In this case, the store application provides data of each product contained in the purchase list, to the household-account management application, each time the payment for the products in the purchase list is completed. The data of each product contained in the purchase list includes data of the price at the time of purchase, and thus, the household-account management application can manage a family budget based on the data of each product provided from the store application. Also in this case, an effort of a user to input data of a purchased product and its price into the household-account management application can be eliminated.

### (4-4) Fourth Modification Example

Next, a fourth modification example will be described.

In the price showing system 1 of the first embodiment, a user scans a product in a store and puts it in a basket or a shopping cart, and payment for the product is completed without the use of cash. However, in this system, a user can put a product, for example, in his or her own bag, without scanning the product and leave the store. An additional measure for preventing such shoplifting will be described as the fourth modification example.

In this modification example, one or a plurality of monitoring cameras are set up in a store. Each of the monitoring cameras successively obtains an image at a fixed point in the store and transmits the image to a computer device coupled to each of the monitoring cameras. The computer device analyzes the image by employing artificial intelligence and detects suspicious behavior of a user.

The computer device can detect suspicious behavior of a user from the image but cannot identify the user who has acted suspiciously. In consideration of this, a radio tag that periodically transmits a beacon signal is attached to each shopping cart in the store, and a receiver for receiving the beacon signal is installed, for example, on a ceiling of the store. The communication protocol between the radio tag and the receiver is not limited, but for example, Bluetooth (registered trademark) Low Energy (BLE) can be used. The receiver calculates an angle of arrival of the beacon signal and notifies data of the angle of arrival to the computer device. The computer device identifies a position (coordinates) in the store of each shopping cart based on the received data of the angle of arrival, in real time.

The computer device matches result of detecting suspicious behavior of a user (time and coordinates of the fixed point) with information of position in the store of each shopping cart corresponding to the time, to identify the user who has acted suspiciously. Upon identifying the user who has acted suspiciously, the computer device outputs an alert to enable a store staff to recognize occurrence of shoplifting (by displaying a notification or outputting a voice sound).

In the situation in which the alert is output, in order to indirectly prevent shoplifting, it is preferable to randomly check users who are about to leave the store. In performing a random check, one person is randomly selected, for example, from among ten users, and the store staff visually checks the person's own bag. Performing a random check encourages a user who has shoplifted, to voluntarily return an unpaid product to a shelf before the user leaves the store.

### (4-5) Fifth Modification Example

Next, a fifth modification example will be described.

Although each of the foregoing embodiments is described by using a case of reading code information of a product as a method of obtaining a product ID and best-by date information from the product, the obtaining method is not limited thereto.

Another method of obtaining a product ID and best-by date information from a product involves receiving a product ID and best-by date information from a radio tag that is attached to a product, a shelf label, or a packaging material of a product, a radio tag disposed close to a product, or the like. In this case, any communication method (e.g., a communication protocol and a frequency to be used) can be used in receiving information. Examples of the communication method include radio frequency identification (RFID), such as near field communication (NFC), and Bluetooth (registered trademark).

It is assumed that an NFC tag that registers a product ID and best-by date information of a product is attached to, for example, the product or a shelf label, and an NFC reader is mounted on the user terminal 3. Under these conditions, in response to a user bringing his or her own user terminal 3 close to the product, the NFC reader of the user terminal 3 receives the product ID and the best-by date information of the product from the NFC tag of the product. The store application of the user terminal 3 then transmits a price inquiry that contains the received product ID and best-by date information of the product, to the application server 5. The application server 5 that has received the price inquiry determines a reduced price of the product and returns information showing the reduced price, to the store application, in the same manner as in the above-described embodiments.

In a case in which an RFID tag, a BLE tag, or the like is attached to, for example, a product or a shelf label, the store application of the user terminal 3 may obtain identification information for identifying the product, from the product, and may inquire the application server 5 about a price and best-by date information of the product. Then, the store application may display information showing the reduced price. Thus, it is not necessary to store best-by date information of a corresponding product, in an RFID tag, a BLE tag, or the like, and best-by date information of each product can be centrally managed by the application server 5.

The product ID of a product can be identified from an image of appearance of the product. In one example in which the user terminal 3 has an imaging unit, an image of a product that is obtained by the imaging unit may be transmitted to the application server 5 by the store application. The application server 5 identifies the product ID of the product from the obtained image of the product. The product ID can be identified by employing artificial intelligence using a learned model. In this case, the image of the product is an example of product information. Under these conditions, the application server 5 may access a database in which a product ID and best-by date information of a product are associated with each other, to acquire best-by date information corresponding to the identified product ID.

The product ID and the best-by date information of a product may be acquired by using a combination of a plurality of pieces of information obtained from the product. Specifically, the product ID and the best-by date information of a product can be acquired by using a combination of at least two or more pieces of information such as code information and textual information obtained from the product, a shelf label, or the like, information obtained from a radio tag, and an image of appearance of the product.

### (4-6) Sixth Modification Example

Next, a sixth modification example will be described. The sixth modification example is an example of making a payment at an ordinary checkout counter or a self-checkout counter in a store by using a user code after a price of a product is checked by using the store application. The user code is issued by the store application and is associated with the offered price of the product in the purchase list. A seventh modification example, which will be described later, is an example of performing only a price check by using the store application.

Although the foregoing embodiments are described by using a case in which a user operates the user terminal 3 to scan a product and make a payment (that is, make a payment by him- or herself), the payment method is not limited thereto. A user can make a payment for a product at an ordinary checkout counter (manned cash register) or a self-checkout counter (unmanned cash register) in a store, after the user operates the user terminal 3 to scan the product and check the price of the product.

The ordinary checkout counter means a cash register terminal that is used by a store staff. The store staff reads code information of products that a user is purchasing, by using a code reader, and the store staff operates the cash register terminal to receive a payment of a grand total of the products by cash, credit card, or the like. The self-checkout counter means a cash register terminal that is used by a user. The user reads code information of products that the user is purchasing, by using a code reader by him- or herself, or the user makes a batch reader read it, and the user operates the cash register terminal to make a payment of a grand total of the products by cash, credit card, or the like. In other words, the self-checkout counter means a cash register terminal that enables completing a payment basically without the need for operation of a store staff.

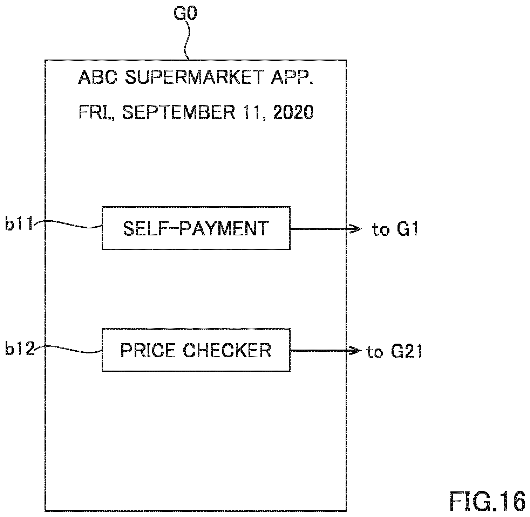

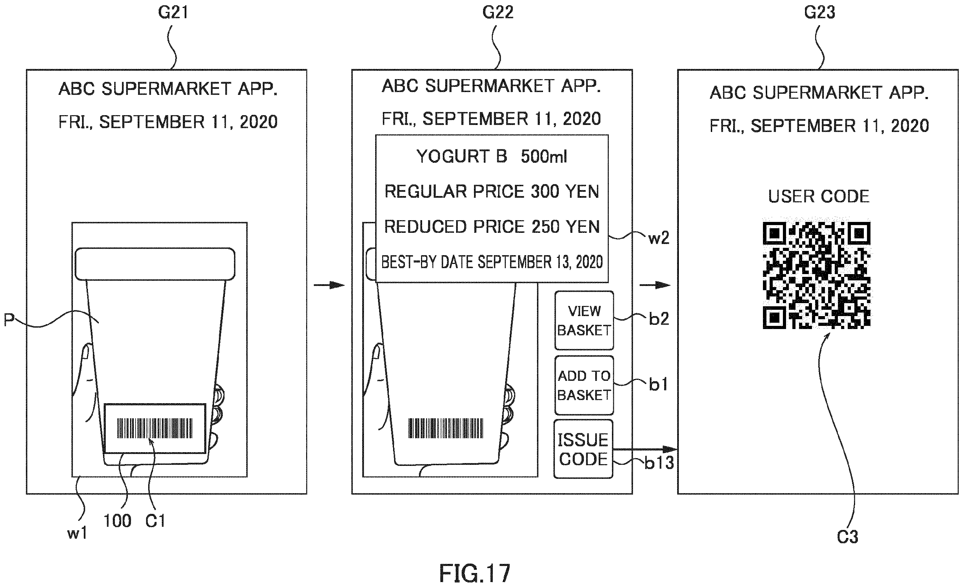

Examples of screens of the store application of the user terminal in this modification example are shown in FIGs. 16 and 17.

FIG. 16 is an example of a screen displayed after the store application is activated, in this modification example. A screen G0 in FIG. 16 contains a button b11 for performing self-payment and a button b12 of a price checker for checking the price of a product. In response to a user operating the button b11, the screen is switched to the screen G1 in FIG. 2, whereby self-payment can be performed as described in relation to the first and the second embodiments and so on.

On the other hand, in the case of operating the button b12 in the screen G0 in FIG. 16, the user can check the price of a product and acquire a user code that is required in purchasing the product at the checked price at an ordinary checkout counter or a self-checkout counter. The user code may be a code associated with the user ID (refer to FIG. 6) or may be a code associated with a member number assigned to the user in a point card, a membership card, or the like of the store.

In the case of operating the button b12 in the screen G0, as shown in screens G21 and G22 in FIG. 17, the user can display a reduced price of a product for each user and best-by date information, as described above, by reading (scanning) code information C1 in an image of the product displayed in a window w1, as in the case of the screens G1 and G2 in FIG. 2. The screen G22 includes a button b 13 for issuing a user code, in addition to the buttons b1 and b2 in the screen G2 (refer to FIG. 2).

In response to operation to the button b13 in the screen G22, a user code C3 is displayed, as shown in a screen G23.

The user code C3 is read by a code reader that is disposed at an ordinary checkout counter or a self-checkout counter. In the case of the ordinary checkout counter, the user shows the user code C3 to a store staff, and the store staff reads only the user code C3 by using the code reader to receive a payment for the product at the price displayed in the screen G22. At this time, the cash register terminal inquires the application server 5 based on the user code C3 that is read by the code reader, to acquire information of the reduced price offered to the user. The same applies to the self-checkout counter, and instead of a store staff, the user reads only the user code C3 with the use of the code reader that is coupled to the self-checkout counter, by him- or herself.

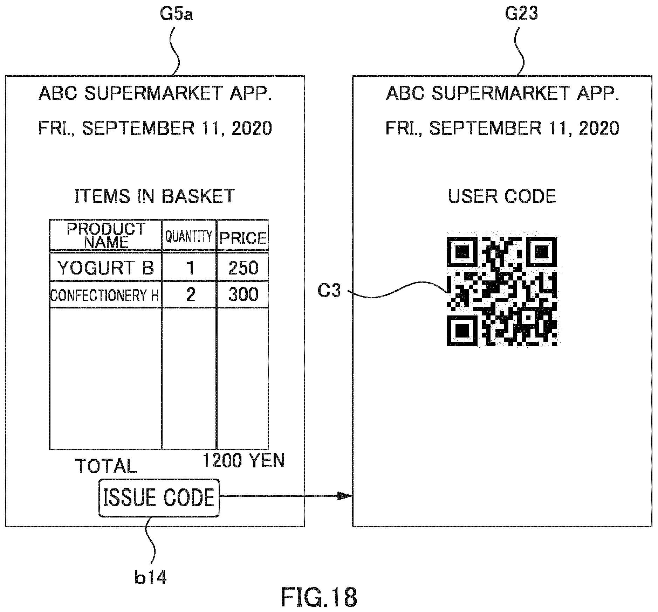

In the case in which the button b2 is operated in the screen G22, for example, a screen G5a in FIG. 18 is displayed. The screen G5a includes displayed contents similar to those in the screen G5 in FIG. 3 but is different therefrom in having a button b14 ("ISSUE CODE") instead of the button b3. In response to operation to the button b14, the user code C3 is displayed, in the same manner as in the screen G23 in FIG. 17. This user code is a code required in making a payment for a product in a basket, at an ordinary checkout counter or a self-checkout counter.

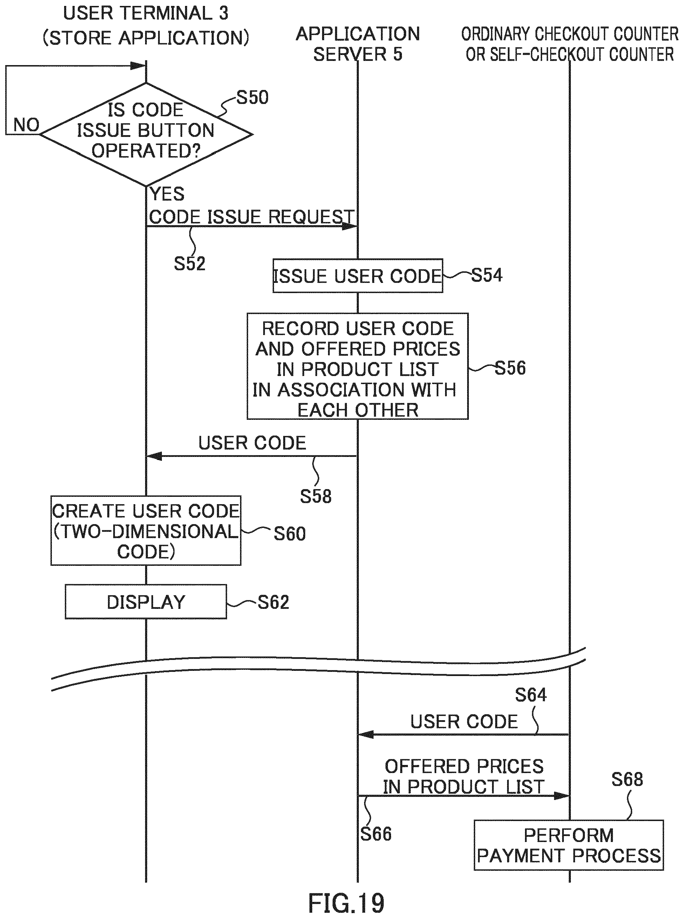

A series of these operations will be further described with reference to a sequence chart in FIG. 19.

In response to operation to the button b14 (code issue button) in the screen G5a in FIG. 18 (step S50: YES), the store application of the user terminal 3 transmits a code issue request to the application server 5 (step S52). The code issue request includes the purchase list that is displayed. Upon receiving the code issue request from the store application, the application server 5 issues a user code (step S54) and records the issued user code and an offered price of each product in the purchase list (offered prices in a product list) included in the code issue request in step S52, in association with each other (step S56). Then, the application server 5 returns the user code, which is issued in step S54, to the store application (step S58).

The store application converts the user code into a two-dimensional code (step S60) and makes the display 34 of the user terminal 3 display a user code C3, as shown in the screen G23 in FIG. 18 (step S62).

The user then carries a product to be purchased, for example, to an ordinary checkout counter, and the user shows the user code displayed on the user terminal 3 to a store staff. Then, the store staff reads the user code by using a code reader that is coupled to a cash register. In response to this, the cash register transmits the read user code to the application server 5 to make an inquiry (step S64). The application server 5 retrieves the offered prices in the product list, which are recorded in associated with the received user code in step S56, and it returns the offered prices to the cash register (step S66). The cash register performs a payment process based on the received offered prices in the product list (step S68). Thus, the user can efficiently make a payment of the product prices that the user has checked on the store application screen before payment.

The same applies to a self-checkout counter. However, this procedure differs from that in the case of the ordinary checkout counter in that a user reads the user code with the use of the code reader coupled to the self-checkout counter by him- or herself, instead of a store staff.

The user code preferably contains information such as date and time when a user enters a store, in addition to the member number assigned to the user, so as to contain information that differs depending on the time the user uses (requests) the user code. In the condition that even the same product may vary in price every day, changing the user code that is acquired by a user, depending on request timing, enables the application server 5 to appropriately manage the user code and a product price for the user.

The ordinary checkout counter and the self-checkout counter are examples of the store terminal.

A user may purchase a plurality of products at an ordinary checkout counter or a self-checkout counter. In this case, the payment may be made based on reduced prices by reading a user code that is issued for one product and inquiring the application server 5 about the reduced prices of all of the plurality of products.

### (4-7) Seventh Modification Example

Next, a seventh modification example will be described.

Although the sixth modification example is described by using a case of preliminarily associating a user with offered prices in a product list before a payment is made at an ordinary checkout counter or a self-checkout counter, the procedure is not limited thereto. In the seventh modification example, a user may check only a product and an offered price in a product list, which data is provided to the user himself or herself, by using the price checker. Then, a product that is being purchased may be actually read at an ordinary checkout counter or a self-checkout counter, and a code for identifying the user displayed on the user terminal 3, such as the user code or a member code, may also be read, in order to make a payment of the offered price of the product depending on the user.

For example, a user in a store can check the price of a product offered to the user himself or herself by using the function of the price checker, which is described in relation to FIGs. 16 and 17, and thus, the user can decide whether to purchase the product. In this case, as shown in FIG. 9, a product price that differs depending on the user status may be shown.

After deciding to purchase the product by using the price checker, the user puts the product, for example, in a basket or a shopping cart of the store, and goes to an ordinary checkout counter or a self-checkout counter. Then, a product bar code or the like of the purchase target is actually read, and the payment of the product is made. At this time, a user code for identifying the user is displayed on the store application screen, for example, by operating the button b13 of the screen G22, and this user code is read with a code reader by a store staff (in the case of an ordinary checkout counter), or the user reads it with a code reader by him- or herself (in the case of a self-checkout counter). Subsequently, the ordinary checkout counter or the self-checkout counter inquires the application server 5 about an offered price of the purchase target product having the read product bar code or the like, based on the user status of the read user code for identifying the user. Then, the application server 5 determines an offered price for the user and returns information of the offered price to the ordinary checkout counter or the self-checkout counter. The ordinary checkout counter or the self-checkout counter performs a payment process based on the information of the offered price received from the application server 5.

In this manner, in this modification example, a user can make a payment of a product to be purchased by making a product bar code or the like of the product to be purchased, be actually read at an ordinary checkout counter or a self-checkout counter in a store, after the user operates the user terminal 3 to scan the product and only check the price of the product.

### (4-8) Eighth Modification Example

Next, an eighth modification example will be described.

In the eighth modification example, a user preliminarily registers information related to substances that can cause the user himself or herself to exhibit allergy symptoms (hereinafter called "allergenic substances"), in the application server 5. Under these conditions, when the store application reads code information of a product that contains an allergenic substance registered by the user, the presence of the allergenic substance is displayed on the user terminal 3. Thus, the user can purchase a product with a feeling of being safe after confirming absence of the user's allergenic substances.

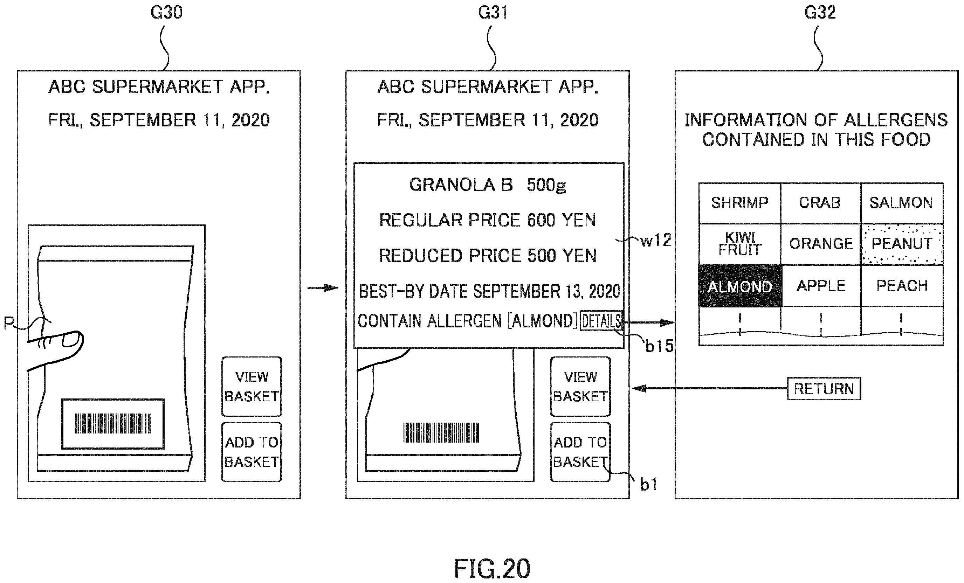

FIG. 20 shows an example of screen transition of the store application of the user terminal 3 in this modification example. Each of the screens G30 and G31 in FIG. 20 corresponds to the screens G1 and G2 in FIG. 2.

The screen G31 has a window w12 that contains information of, for example, a product name, a regular price, a reduced price, and a best-by date, which corresponds to a product ID, and moreover, information of presence/absence of allergenic substances. Herein, the drawing shows an example in which a user has already registered "almond" as the user's allergenic substance. The window w12 shows that allergenic substances contained in the read product (in this example, "GRANOLA") include the allergenic substance ("almond") that the user has registered in advance.

The window w12 of the screen G31 may be provided with a button b 15 for checking details of allergenic substances contained in the target product. In response to operation to the button b15, a screen G32 is displayed. The screen G32 displays to inform allergenic substances (e.g., "almond" and "peanut") contained in the target product, among items of allergens that must be displayed (for example, items specified by the food labeling law), while the allergenic substance ("almond") that the user has registered in advance is highlighted.

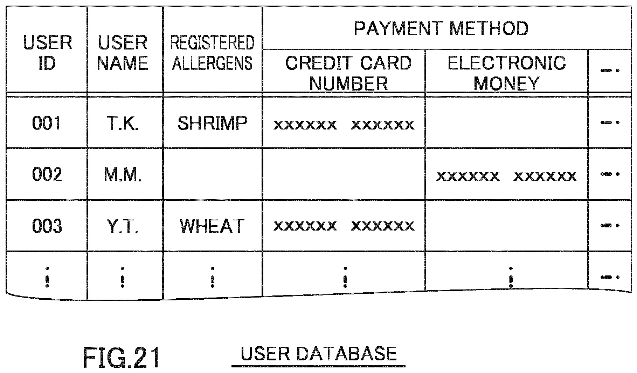

An example of components of a user database of this modification example is shown in FIG. 21. Compared with the user database (refer to FIG. 5) of the first embodiment, the user database in FIG. 21 is different in that a value of a "REGISTERED ALLERGENS" field is added in each record. The value in the "REGISTERED ALLERGENS" field is input in accordance with a request from a corresponding user and shows an allergenic substance specific to the user.

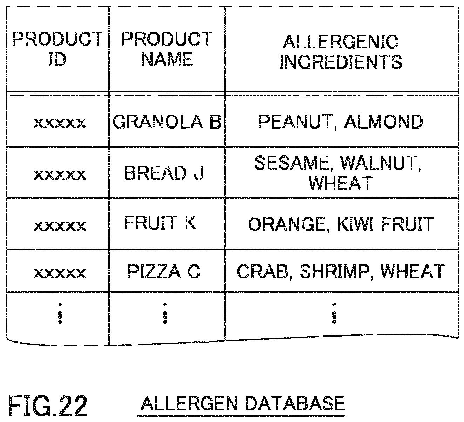

On the other hand, the storage 52 (an example of a storage) of the application server 5 stores an allergen database as illustrated in FIG. 22. As shown in FIG. 22, the allergen database contains information related to allergenic substances (allergenic ingredients) contained in each product sold in a store. The allergenic ingredients correspond to the contents displayed in the screen G32 in FIG. 20.

The store application of the user terminal 3 reads code information of a product and then transmits a price inquiry that contains received product ID and best-by date information of the product, to the application server 5. This procedure is the same as that described by referring to FIG. 7. In this modification example, upon receiving the price inquiry, the controller 51 of the application server 5 refers to the user database (FIG. 21) to retrieve information of registered allergens corresponding to a user ID of the store application. The controller 51 then refers to the allergen database (FIG. 22) to determine whether the retrieved registered allergens are included in the allergenic ingredients corresponding to the product ID contained in the price inquiry.

The communication unit 53 of the application server 5 returns both price data and information of result of determination whether the registered allergens are included in the allergenic ingredients of the target product, to the store application of the user terminal 3. That is, the communication unit 53 functions as a notification unit that notifies the user terminal 3 of allergy information showing presence of allergenic substances, in the case in which the registered allergens are included in the allergenic ingredients corresponding to the product ID. The store application of the user terminal 3 displays an indication, as illustrated in the screen G31 in FIG. 20, based on the price data and the determination result.

It is preferable to establish a system that inhibits a user from purchasing a product that contains a registered allergen of the user.

For example, for a product that contains a registered allergen of a user, the store application may control to invalidate operation to the button b1 ("ADD TO BASKET") in the screen G31.

Alternatively, in the case in which, for example, a user code described in relation to the sixth modification example, is read at an ordinary checkout counter or a self-checkout counter by a code reader, a cash register terminal may transmit an inquiry containing a product ID of a payment target to the application server 5 and may receive, from the application server 5, result of determination whether the registered allergens are included in the allergenic ingredients corresponding to the product ID. In the case in which the registered allergen is included, the cash register terminal may output an alert (alarm sound or alarm indication) to the user or may inhibit payment of the product containing the registered allergen.

In this manner, it is possible to establish a system that inhibits a user from purchasing a product that contains a registered allergen of the user. Thus, the user does not need to check whether the user's allergenic substance is contained in a product, by looking at an ingredient label or the like on the product. In addition, this system enables a user to avoid mistakenly purchasing a product containing the user's allergenic substance due to forgetting to visually check an ingredient label or the like of the product.

For a prepared food product, information of allergenic substances contained in another product that is manufactured immediately before the product is manufactured, may also be registered in a database. In this case, a user may read, for example, code information of a product, by using the store application of the user terminal 3, and a registered allergen of the user may be contained in another product, which is manufactured immediately before the read product is manufactured. In such a situation, a notice of the possibility that also the read product contains a minute amount of the registered allergen, is displayed on the store application. This makes it possible to provide a consumer with a system that enables purchasing products more securely and safely.

### (4-9) Ninth Modification Example

Next, a ninth modification example will be described.

The third embodiment is described by using a case in which a label printed with a markdown indication code is attached to a product and the markdown indication code of the price-reduction target product is notified to a user. The use of the markdown indication code is not limited to the case in which a user carries the user terminal 3 installed with the store application. In this modification example, a system for displaying a markdown indication code of a price-reduction target product on a display device (e.g., a digital signage display or an electronic shelf label) in a store, will be described.

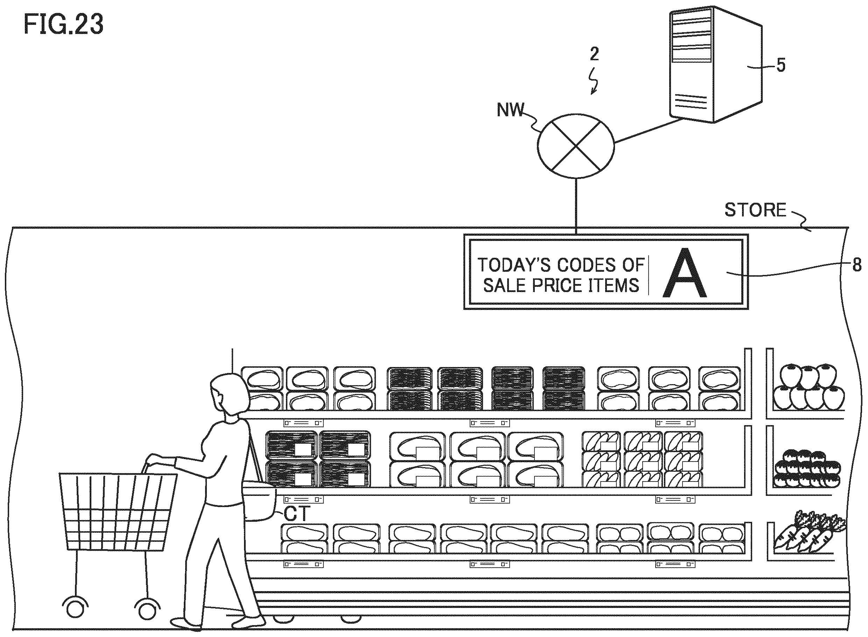

FIG. 23 schematically shows a system configuration of a price showing system 2 of this modification example.

As shown in FIG. 23, the price showing system 2 of this modification example includes an application server 5 and a digital signage display 8 set up in a store, which is an example of a display device. The application server 5 and the digital signage display 8 are able to communicate with each other via a network NW.

As described in relation to the third embodiment, at least one of products in the store is attached with a label having a markdown indication code. In this modification example, the application server 5 determines a markdown indication code of a price-reduction target and makes the digital signage display 8 in the store display the determined markdown indication code. That is, in this modification example, the controller 51 of the application server 5 functions as an indication information determination unit and a display controller, which are described below. For example, the controller 51 executes a server program to make a computer implement the following functions.
(i) An indication information determination unit that determines one or more markdown indication codes to be attached to a product in which the price is reduced from a standard price (that is, a price-reduction target product), from among a plurality of different markdown indication codes.
(ii) A display controller that makes the digital signage display 8 display the one or more markdown indication codes determined by the indication information determination unit.

The controller 51 of the application server 5 determines a markdown indication code of a price-reduction target product, for example, in the manner as illustrated in FIG. 11, but the determination method is not limited thereto. The controller 51 may determine a markdown indication code of a price-reduction target product depending on a daily stock status of the product. In one example, unlike the example shown in FIG. 11, a markdown indication code of a price-reduction target product may be appropriately changed depending on a stock status of the product, as follows. That is, the markdown indication code of the price-reduction target product may be set to a markdown indication code for a product having a best-by date that is the current day or the next day, or to a markdown indication code for a product having a best-by date that is the current day, the next day, or the day after the next day. Alternatively, a markdown indication code of a price-reduction target product may not be determined by the application server 5 but may be determined by a store staff or other person.

Displaying a markdown indication code on the digital signage display 8 enables a user to identify a price-reduction target product without carrying a user terminal that is installed with the store application, whereby the user can purchase the price-reduction target product at an ordinary checkout counter or a self-checkout counter.

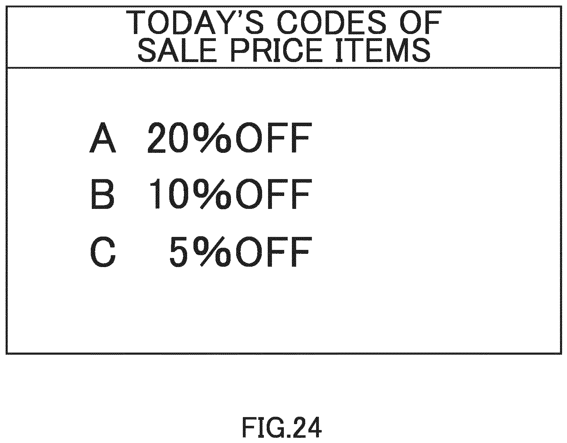

The controller 51 of the application server 5 may make the digital signage display 8 display two or more different markdown indication codes, together with corresponding ones of a plurality of pieces of information of different degrees of price reduction (e.g., information of rates of price reduction). An example of such a display is shown in FIG. 24.

The display example shown in FIG. 24 corresponds to the settings of the labels with a markdown indication code illustrated in FIG. 11, and for example, this display appears on the digital signage display 8 in a store, on May 19, 2020. In the case in FIG. 24, the markdown indication codes are displayed to a user, as "CODES OF SALE PRICE ITEMS." In one example, the rate of price reduction is changed with respect to each of the codes of the sale price items (that is, markdown indication codes). Specifically, the display shows that products having a best-by date that is the current day (markdown indication code: A) are 20% off, products having a best-by date that is the next day (markdown indication code: B) are 10% off, and products having a best-by date that is the day after the next day (markdown indication code: C) are 5% off. A user who has checked such information on the digital signage display 8 in the store can instantaneously recognize the following information by looking at the markdown indication code of a label attached to a product in the store. For example, it is possible to instantaneously recognize whether the product is a price-reduction target and how much the rate of price reduction is if it is a price-reduction target.

FIG. 24 shows an example of making the digital signage display 8 display markdown indication codes of price-reduction target products without limiting products to certain products in a store, for example, without differentiating the types of products. However, the displaying method is not limited thereto. In the case of making an electronic shelf label corresponding to a product display a markdown indication code, an individual code corresponding to each product can be displayed. In one example, it is assumed that markdown indication codes of a label attached to a product PX are "X1," "X2," ... , and markdown indication codes of a label attached to a product PY are "Y1," "Y2," .... In this case, "X1," "X2," ... , are displayed on the electronic shelf label corresponding to the product PX, as the "CODES OF SALE PRICE ITEMS," and "Y1," "Y2," ... , are displayed on the electronic shelf label corresponding to the product PY, as the "CODES OF SALE PRICE ITEMS."

The digital signage display 8 can be a display device having a relatively large screen, and therefore, in making the digital signage display 8 display the markdown indication codes, the markdown indication codes can be informed to many users in the store by hanging the digital signage display 8 on a wall of the store. Thus, this displaying method is suitable for displaying markdown indication codes that are used for all products in a store, instead of a certain product. On the other hand, the electronic shelf label is a small display device that is disposed on a product shelf, and therefore, it is appropriate for displaying a markdown indication code of an individual product. As described above, it is possible to make each of electronic shelf labels corresponding to respective products display a markdown indication code for each of the products.

As described in relation to the third embodiment, a markdown indication code of a price-reduction target product may be displayed, for example, when the store application is activated. In this case, in response to the application server 5 determining one or more markdown indication codes assigned to price-reduction target products, the store application (an example of a display controller) of the user terminal 3 receives the one or more markdown indication codes from the application server 5 and makes the display 34 display them. Thus, a user who carries the user terminal 3 installed with the store application can identify a price-reduction target product without looking at the contents displayed on the digital signage display 8 or the like in a store, as described above.

Although embodiments of the information processing system, the information processing method, and the program of the present invention are described above, the present invention should not be limited to the foregoing embodiments. In addition, the embodiments described above can be variously modified and altered within the scope not departing from the gist of the present invention. For example, each technical characteristic described in each of the embodiments and the modification examples described above can be combined with a part or all of another embodiment or another modification example, as appropriate, unless technical contradiction occurs.

In the embodiments and the modification examples described above, at least one of the functions of the application server 5 may be implemented by software of the user terminal 3, and at least one of the functions of the user terminal 3 may be implemented by software of the application server 5. In addition, each of the functions of the user terminal 3 and each of the functions of the application server 5 may be implemented by allocating them to the user terminal 3 and the application server 5, as necessary. The functions that are executed by the application server 5 may be executed by allocating them to a plurality of devices.

## Claims

1. An information processing system comprising:
a user terminal carried by a user; and
a server being capable of communicating with the user terminal,
the user terminal comprising:
an obtaining unit configured to obtain product information and expiration information related to an expiration date of a product from the product; and
a display controller configured to cause a display to show information containing an offered price of the product, which is acquired from the server,
the server comprising:
a price determination unit configured to determine the offered price of the product based on the product information and the expiration information acquired from the user terminal; and
a price information providing unit configured to provide information that contains the offered price of the product determined by the price determination unit, to the user terminal.

2. The information processing system according to claim 1, wherein the obtaining unit is configured to obtain information related to the user, and
the price determination unit is configured to determine the offered price of the product based on the product information, the expiration information, and the information related to the user.

3. The information processing system according to claim 1 or 2, wherein the price determination unit is configured to determine the offered price of the product based on the product information and closing time of a store that sells the product.

4. The information processing system according to any one of claims 1 to 3, wherein the server comprises an association unit configured to associate the user with one of a plurality of categories, and
the price determination unit is configured to determine the offered price of the product based on the category that is associated by the association unit.

5. The information processing system according to any one of claims 1 to 4, wherein the display controller is configured to cause the display to show information indicating a standard price of the product or information indicating a rate of change of the offered price from the standard price of the product.

6. The information processing system according to any one of claims 1 to 5, wherein the price determination unit is configured to determine an application start time when the offered price of the product is applied, based on the closing time of the store that sells the product and on a quantity of stock of the product, and
the display controller is configured to cause the display to show information indicating the application start time of the offered price of the product.

7. The information processing system according to any one of claims 1 to 6, wherein the server is configured to cause a printer to print a plurality of labels with different pieces of markdown indication information.

8. The information processing system according to any one of claims 1 to 7, wherein the display controller is configured to cause the display to show a first operation target for adding the product in a purchase list or a second operation target for instructing to make a payment of the product that has been added to the purchase list.

9. The information processing system according to claim 8, wherein the server comprises a payment processor configured to perform a payment process for the product that has been added to the purchase list, in accordance with an instruction for the second operation target, which is obtained from the user terminal.

10. The information processing system according to any one of claims 1 to 9, wherein the obtaining unit is configured to obtain the expiration information from code information containing the expiration information.

11. The information processing system according to any one of claims 1 to 10, further comprising a store terminal that is capable of communicating with the server, wherein
the server is configured to provide user code information to the user terminal, and
the store terminal is configured to, in a case of reading the user code information, acquire information containing the offered price of a product, which is provided to the user terminal from the server, and then perform a payment process of the product.

12. The information processing system according to claim 11, wherein, in a case in which the store terminal has read the product information and the expiration information of the product and reading the user code, the store terminal is configured to acquire information containing the offered price of the product, which has been provided to the user terminal from the server, and then perform the payment process of the product.

13. The information processing system according to any one of claims 1 to 12, wherein the server comprises:
a storage configured to store information related to an allergenic substance of the user; and
a notification unit configured to, in a case in which the allergenic substance is contained in a product corresponding to the product information acquired from the user terminal, notify the user terminal of allergy information indicating presence of the allergenic substance, and
the display controller is configured to cause the display to show the allergy information that is acquired from the server.

14. An information processing system comprising:
a display device disposed in a store that sells a product; and
a server being capable of communicating with the display device,
the product being attached with one of a plurality of different pieces of markdown indication information,
the server comprising:
an indication information determination unit configured to determine one or more pieces of markdown indication information to be attached to a product whose price is reduced from a standard price, from among the plurality of different pieces of markdown indication information; and
a display controller configured to cause the display device to show the one or more pieces of markdown indication information determined by the indication information determination unit.

15. The information processing system according to claim 14, wherein the display controller is configured to cause the display device to show two or more different pieces of markdown indication information, which are respectively associated with one of a plurality of pieces of information indicating different degrees of price reduction.

16. The information processing system according to claim 14 or 15, further comprising a user terminal carried by a user and being capable of communicating with the server,
the user terminal comprising a display controller configured to cause a display to show the one or more pieces of markdown indication information provided from the server.

17. An information processing method that is performed between a user terminal carried by a user and a server being capable of communicating with the user terminal, the method comprising:
obtaining, by the user terminal, product information and expiration information related to an expiration date of a product from the product,
acquiring, by the server, the product information and the expiration information obtained by the user terminal,
determining, by the server, an offered price of the product based on at least one of the product information and the expiration information acquired from the user terminal,
providing, by the server, information that contains the determined offered price of the product, to the user terminal, and
causing, by the user terminal, a display to show information containing the offered price of the product acquired from the server.

18. A program configured to cause a computer to execute a method in a user terminal that is carried by a user,
the method comprising:
obtaining product information and expiration information related to an expiration date of a product from the product;
providing the obtained product information and expiration information of the product to a server that is able to communicate with the user terminal, to request the server to provide information containing an offered price of the product; and
causing a display of the user terminal to show the information containing the offered price, which is acquired from the server.
